(19) Europäisches Patentamt
European Patent Office
Office européen des brevets

(11) Veröffentlichungsnummer: **0 074 589**
**B1**

(12) # EUROPÄISCHE PATENTSCHRIFT

(45) Veröffentlichungstag der Patentschrift: **05.12.84**

(51) Int. Cl.³: **C 09 B 44/02,** D 06 P 1/41, C 09 B 43/16, D 21 H 3/80

(21) Anmeldenummer: **82108167.6**

(22) Anmeldetag: **04.09.82**

(54) **Triazinfarbstoffe, ihre Herstellung und Verwendung.**

(30) Priorität: **16.09.81 DE 3136679**

(43) Veröffentlichungstag der Anmeldung: **23.03.83 Patentblatt 83/12**

(45) Bekanntmachung des Hinweises auf die Patenterteilung: **05.12.84 Patentblatt 84/49**

(84) Benannte Vertragsstaaten: **CH DE FR GB LI**

(56) Entgegenhaltungen:
**EP - A - 0 054 616**
**FR - A - 2 424 305**

(73) Patentinhaber: **BAYER AG, Konzernverwaltung RP Patentabteilung, D-5090 Leverkusen 1 Bayerwerk (DE)**

(72) Erfinder: **Kunde, Klaus, Dr., Uppersberg 45, D-5090 Leverkusen (DE)**
Erfinder: **Stöhr, Frank-Michael, Dr., Weidenweg 25, D-5093 Burscheid (DE)**

**EP 0 074 589 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Farbstoffe der allgemeinen Formel

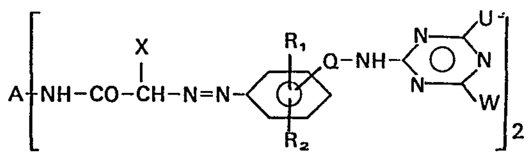

(I)

worin U und W unabhängig voneinander Reste der Formeln

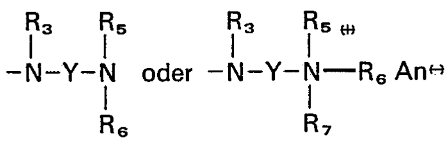

oder

A ein von anionischen Gruppen freier bifunktioneller aromatischer Rest,

Q eine direkte Bindung oder ein Brückenglied,

X ein Rest der Formel $-COCH_3$, $-CN$, $-COOCH_3$, $-COOC_2H_5$, $-CONH_2$, $-COC_6H_5$ oder $-CON(R_3)-Y-N(R_5R_6R_7)^{(+)}$ $An^{(-)}$,

Y ein zweiwertiges Brückenglied oder eine direkte Bindung,

$R_1$ und $R_2$ unabhängig voneinander Wasserstoff oder ein nichtionischer Substituent,

$R_3$ Wasserstoff, $C_1$ bis $C_4$-Alkyl oder β- und γ-$C_2$ bis $C_4$-Hydroxyalkyl,

$R_5$ bis $R_7$ unabhängig voneinander Wasserstoff, $C_1$ bis $C_4$-Alkyl, oder $C_2$ bis $C_4$-Alkyl, das durch Hydroxy, Amino, $C_1$ bis $C_4$-Alkylamino, Di-$C_1$ bis $C_4$-alkylamino oder Tri-$C_1$ bis $C_4$-alkylammonium substituiert ist, Phenyl oder Benzyl sind, oder

$R_5$ und $R_6$ zusammen mit dem Stickstoff einen gegebenenfalls substituierten fünf- oder sechsgliedrigen Heterocyclus, oder

Y, $R_3$ und $R_5$ zusammen mit den jeweiligen Stickstoffatomen einen Piperazinring bilden, oder

$R_5$, $R_6$ und $R_7$ zusammen mit dem Stickstoff ein gegebenenfalls substituiertes Pyridinium bilden, und

$An^{(-)}$ ein Anion ist,

sowie Verfahren zu ihrer Herstellung, dadurch gekennzeichnet, dass man ein Cyanurhalogenid in beliebiger Reihenfolge und in der üblichen Weise mit den Verbindungen II und/oder III sowie IV

$$HN(R_3)-Y-NR_5R_6 \qquad (II)$$

$$[HN(R_3)-Y-NR_5R_6R_7]^{\oplus}\ An^{\ominus} \qquad (III)$$

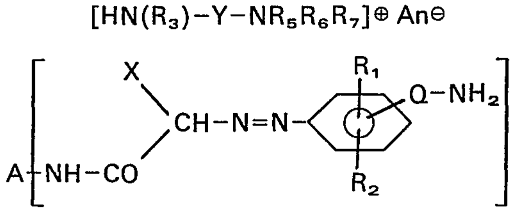

(IV)

wobei A, Q, X, Y, $R_1$ bis $R_3$, $R_5$ bis $R_7$ und $An^{(-)}$ die oben angegebene Bedeutung besitzen,

in vorzugsweise äquimolaren Mengen umsetzt oder dass man ein Amin der allgemeinen Formel

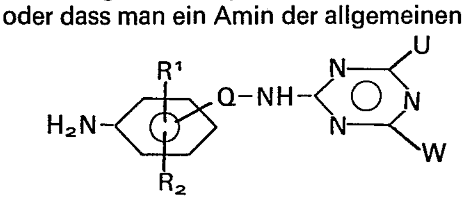

(V)

diazotiert und mit vorzugsweise einer äquimolaren Menge einer Kupplungskomponente der allgemeinen Formel

$$[X-CH_2-CO-NH]_{\overline{2}}A \qquad (VI)$$

wobei A, Q, X, $R_1$, $R_2$, U und W die oben angegebene Bedeutung besitzen,

kuppelt. Die Herstellung durch Kupplung wird vorzugsweise so durchgeführt, dass man ohne Isolierung der Farbstoffe konzentrierte verkaufsfertige Lösungen mit einem Farbstoffgehalt von mindestens 10% Farbstoff erhält. Die Kupplung verläuft in diesem Fall in Wasser in Gegenwart von organischen Säuren und gegebenenfalls weiteren organischen Lösungsmitteln bei pH-Werten von $\leqslant 5$.

Ausserdem betrifft die Erfindung die Verwendung der Farbstoffe der Formel I bzw. Mischungen derselben zum Färben von synthetischen und natürlichen kationisch anfärbbaren Materialien, insbesondere Papier.

A kann für einen aromatischen Rest der isocyclischen oder heterocyclischen Reihe stehen. Insbesondere steht es für einen Rest der Benzol-, Biphenyl-, Naphthalin-, 2-Phenylbenzimidazol-, Benzophenon- oder Benzanilidreihe.

Als Brückenglied Q sind beispielsweise die Reste

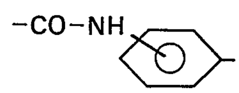

und

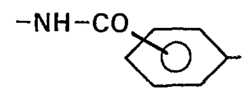

zu nennen, wobei der Benzolring mit der NH-Gruppe der Formel I verbunden ist.

Das Brückenglied Y steht z.B. für $C_2$ bis $C_5$-Alkylen, $C_5$ bis $C_7$-Oxaalkylen, Phenylen oder Benzylen.

Als nichtionische Substituenten $R_1$ und $R_2$ sind beispielsweise Halogen, insbesondere Chlor oder Brom, $C_1$ bis $C_4$-Alkyl oder $C_1$ bis $C_4$-Alkoxy zu nennen.

$R_5$ und $R_6$ können zusammen mit dem Stickstoff z.B. einen gegebenenfalls durch $C_1$ bis $C_4$-Alkyl substituierten Pyrrolidin-, Morpholin-, Piperazin- oder Piperidinring bilden.

$R_5$, $R_6$ und $R_7$ bilden zusammen mit dem Stickstoff vorzugsweise Pyridinium oder Picolinium.

Von den Farbstoffen der Formel I sind die Farbstoffe der Formel

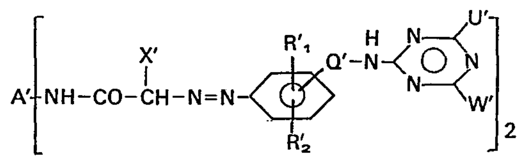

(VII)

bevorzugt,

worin

U' und W' unabhängig voneinander Reste der Formeln

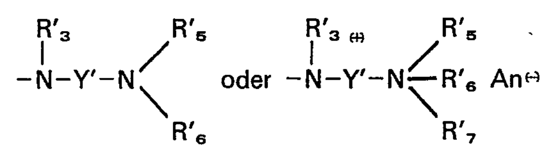

oder

sind,

A' ein Rest der Formel 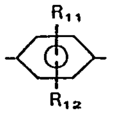 , 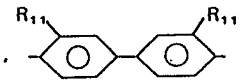 ,

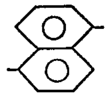 , 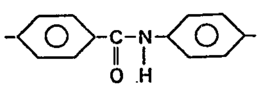

worin wiederum

$R_{11}$ und $R_{12}$ unabhängig voneinander H, Cl, Br, $OCH_3$, $OC_2H_5$, $CH_3$ oder $C_2H_5$ bezeichnen,

Q' eine direkte Bindung oder ein Rest p-NHCOC$_6$H$_4$– oder p-CONHC$_6$H$_4$–,

X' ein Rest der Formel $-COCH_3$, $-CN$, $-COOCH_3$, $-COOC_2H_5$, $-CONH_2$, $-COC_6H_5$ oder $-CON(R'_3)-Y'-N(R'_5R'_6R'_7)^{(+)}$ $An^{(-)}$,

Y' eine direkte Bindung, $C_2$ bis $C_5$-Alkylen, $C_5$ bis $C_7$-Oxaalkylen, Phenylen oder Benzylen,

$R'_1$ und $R'_2$ unabhängig voneinander H, Cl, Br, $-OCH_3$, $-OC_2H_5$, $-CH_3$ oder $-C_2H_5$,

$R'_3$ Wasserstoff, $C_1$ bis $C_4$-Alkyl, β- oder γ-$C_2$ bis $C_4$-Hydroxyalkyl,

$R'_5$ bis $R'_7$ unabhängig voneinander Wasserstoff, $C_1$ bis $C_4$-Alkyl oder $C_2$ bis $C_4$-Alkyl, das durch Hydroxy, Amino, $C_1$ bis $C_4$-Alkylamino, Di-$C_1$ bis $C_4$-alkylamino oder Tri-$C_1$ bis $C_4$-alkylammonium substituiert ist, Phenyl oder Benzyl sind, oder

$R'_5$ und $R'_6$ jeweils zusammen mit dem Stickstoff einen Pyrrolidin-, Morpholin-, Piperazin- oder Piperidinring, oder

Y', $R'_3$ und $R'_5$ zusammen mit dem jeweiligen Stickstoff einen Piperazinring bilden,

$R'_5$, $R'_6$ und $R'_7$ zusammen mit dem Stickstoff Pyridinium sind, wobei diese Heterocyclen durch $C_1$ bis $C_4$-Alkyl substituiert sein können, und

$An^{(-)}$ ein Anion ist.

Von besonderem Wert sind Farbstoffe der Formeln VIII und IX

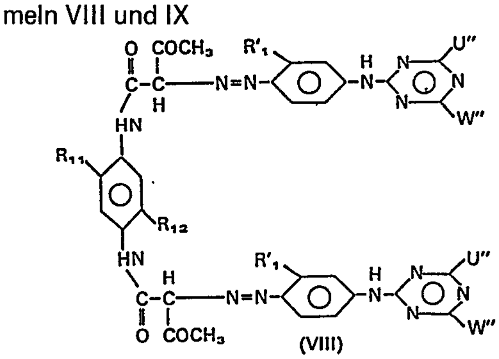

(VIII)

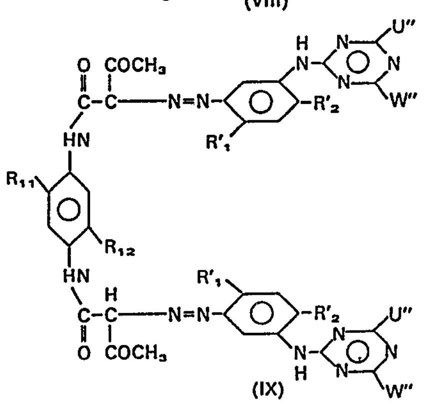

(IX)

worin

U'' und W'' unabhängig voneinander Reste der Formel

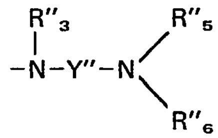 oder 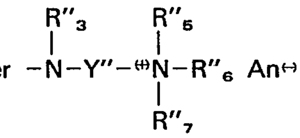

Y'' $C_2$ bis $C_4$-Alkylen,

$R''_3$ Wasserstoff oder $C_1$ bis $C_4$-Alkyl, und

$R''_5$ bis $R''_7$ unabhängig voneinander Wasserstoff, $C_1$ bis $C_4$-Alkyl oder $C_2$ bis $C_4$-Alkyl, das durch Hydroxy, Amino, $C_1$ bis $C_4$-Alkylamino, Di-$C_1$ bis $C_4$-alkylamino oder Tri-$C_1$ bis $C_4$-alkylammonium substituiert ist, sind, oder

$R''_5$ und $R''_6$ jeweils zusammen mit dem Stickstoff einen Pyrrolidin-, Morpholin-, Piperazin- oder Piperidinring bilden, oder

Y'', $R''_3$ und $R''_5$ zusammen mit dem jeweiligen Stickstoff einen Piperazinring bilden, und

$R'_1$, $R'_2$, $R_{11}$, $R_{12}$ und $An^{(-)}$ die in Formel VII angegebene Bedeutung besitzen.

Als Arylidkomponenten

$$NH_2-A-NH_2$$

werden z.B. 1,4-Diaminobenzol, 2-Chlor-1,4-diaminobenzol, 2-Methoxy-1,4-diaminobenzol, 2-Methyl-1,4-diaminobenzol, 2,5-Dichlor-1,4-diaminobenzol, 2,5-Dimethoxy-1,4-diaminobenzol, 2,5-Dimethyl-1,4-diaminobenzol, 3,3'-Dianisidin, 3,3'-Dichlorbenzidin, 4,4'-Diaminobenzanilid, 1,5-Diaminonaphthalin, 4-Amino-2-(4'-aminophenyl)benzimidazol eingesetzt.

Die β-Carbonylcarbonsäurearylide, die als Kupplungskomponenten verwendet werden, erhält man z.B., indem man die Diamine in an sich bekannter Weise mit einem der folgenden Reagenzien umsetzt.

Diketen, Acetessigsäuremethylester, Acetessigsäureethylester, Cyanessigsäureethylester, Cyanessigsäuremethylester, Malonsäuredimethylester, Malonsäurediethylester, Malonsäuremonomethylesteramid, Malonsäuremonomethylesteriminoester, Benzoylessigsäuremethylester.

Die Aniline der Formel V erhält man z.B., indem man Nitroaniline nach der in der DE-OS Nr. 2915323 beschriebenen Methode umsetzt; als Reduktionsmethode kommt auch die Reduktion mit Natriumdithionit oder die katalytische Reduktion, z.B. mit Raney-Nickel, in Frage. Als Nitroaniline kommen z.B. in Betracht:

p-Nitroanilin, m-Nitranilin, 4-Nitro-3-methylanilin, 3-Nitro-4-methylanilin, 4-Nitro-3-methoxyanilin, 3-Nitro-4-methoxyanilin, 3-Nitro-4-ethoxyanilin, 4-Nitro-3-ethoxyanilin, 4-Nitro-3-chloranilin, 4-Chlor-3-nitroanilin, 5-Nitro-2-methylanilin, 5-Nitro-2,4-dimethylanilin.

Als Amine, die durch Quaternierung in die Ammoniumverbindungen III überführt werden können, können z.B. folgende verwendet werden:

2-Dimethylaminoethylamin, 3-Dimethylaminopropylamin, 2-(2'-Dimethylaminoethoxy)ethylamin, 3-Morpholinopropylamin, 2-Diethylaminoethylamin, 3-Diethylaminopropylamin, 2-(Bis-β-

hydroxyethylamino)ethylamin, 3-(Bis-β-hydroxyethylamino)propylamin, 4-Dimethylaminoanilin, 3-Dimethylaminoanilin, 4-Aminodimethylbenzylamin, 3-Aminodimethylbenzylamin, 4-Aminomethylbenzylamin, 1,2-Diaminoethan, 1,2-Diaminopropan, 1,2-Diaminobutan, 1,4-Diaminobutan, 2-Methylaminoethylamin, Methyl-2-aminopropylamin, Diethylentriamin, Bis-(3-aminopropyl)amin, Bis-(3-aminopropyl)methylamin, β-Hydroxyethylpiperazin, β-Aminoethylpiperazin.

Zur Überführung der Amine in die entsprechenden Ammoniumionen kann man entweder mit einer organischen Säure oder mit einer Mineralsäure protonieren oder mit einem Quaternierungsreagenz umsetzen, z.B. mit Methylchlorid, Methylbromid, Methyljodid, Benzolsulfonsäuremethylester, Ethylchlorid, Benzolsulfonsäureethylester, Dimethylsulfat und Diethylsulfat oder Ethylenoxid, Propylenoxid oder Butylenoxid in Gegenwart von Säuren.

Die Umsetzung mit dem Quaternierungsreagenz kann auch an anderer geeigneter Stelle des Syntheseweges erfolgen, z.B. als letzter Schritt nach der Kupplung.

Anstelle der Nitroaniline kann man auch die entsprechenden halbseitig geschützten Phenylendiamine verwenden, z.B. die Formylaminoaniline oder die Aminophenyloxamidsäuren, wobei man dann statt der Reduktion eine selektive Hydrolyse der Schutzgruppe vornehmen muss.

Ebensogut kann man auch in der üblichen Weise die geeigneten Nitroaniline oder Formylaminoaniline bzw. Aminophenyloxamidsäuren mit einer der erfindungsgemässen Kupplungskomponenten kuppeln und die Kupplungsprodukte selektiv reduzieren bzw. hydrolysieren; die entstandene Aminogruppe wird nun in üblicher Weise mit einem Cyanurhalogenid, dieses Produkt mit den erfindungsgemässen Diaminen umgesetzt; schliesslich wird gegebenenfalls wie oben angeführt die Tetraammoniumverbindung hergestellt.

Die Farbstoffe können isoliert und getrocknet werden, sie können aber auch mit geeigneten Lösungsmitteln in stabile, konzentrierte Lösungen überführt werden, oder die durch Kupplung erhaltenen Lösungen können direkt zum Färben verwendet werden.

Geeignete Lösungsmittel sind z.B. wässerige Lösungen von Mineralsäuren und/oder organischen Säuren, z.B. Salz-, Schwefel-, Phosphor-, Ameisen-, Essig-, Glykol-, Milch-, Methansulfonsäure.

Als Lösungsmittel können aber auch organische Lösungsmittel wie z.B. Ethylenglykol, Diglykol, Triglykol, Glycerin, Ethylenglykolmonomethylether, Diglykolmonoethylether, Diglykolmonobutylether, Formamid, Dimethylformamid u. ä. verwendet oder mitverwendet werden.

Die erfindungsgemässen Farbstoffe, die basische Aminogruppen enthalten, werden vorzugsweise vor der Verwendung zum Färben durch Zugabe einer organischen oder Mineralsäure in die korrespondierenden Ammoniumverbindungen überführt.

Die erfindungsgemässen kationischen Farbstoffe färben kationisch anfärbbare Materialien wie z.B. Polyacrylnitril, sauer modifizierten Polyester und Polyamid, Wolle und Leder, aber auch Celluloseregeneratfasern, insbesondere Papier, mit guten Echtheiten in gelben Tönen.

Die Farbstoffe können zum Papiermassefärben oder zur Papieroberflächenfärbung eingesetzt werden. Sie sind geeignet für geleimte und für ungeleimte Papiersorten ausgehend von gebleichtem oder ungebleichtem Zellstoff verschiedener Provenienz wie Nadel- oder Laubholz-Sulfit- und/oder -Sulfat-Zellstoff.

Das Färben erfolgt vorzugsweise bei pH-Werten von 2 bis 8, insbesondere pH 5 bis 7. Die Färbetemperatur beträgt im allgemeinen 10 bis 50, vorzugsweise etwa 20°C.

Die bei der Papierfärbung und -herstellung üblichen Hilfsmittel und Füllstoffe können beim Einsatz der erfindungsgemässen Farbstoffe mitverwendet werden. Die Farbstoffe besitzen bei der Papierfärbung ein ausgezeichnetes Ziehvermögen.

Die mit den erfindungsgemässen Farbstoffen erhaltenen Papierfärbungen zeichnen sich durch sehr gute Wasserechtheit (Ausblutechtheit) sowie Säure-, Alkali- und Alaunechtheit aus. Hervorzuheben ist auch die überraschend hohe Lichtechtheit der Papierfärbungen. Auch auf die Brillanz und Klarheit der Farbtöne ist hinzuweisen. Ferner ist das Kombinationsverhalten mit geeigneten Farbstoffen sehr gut.

Die Farbstoffe können auch zum Färben von Baumwolle und von Celluloseregeneratfasern eingesetzt werden, ohne dass die bisher üblichen Hilfsmittel wie z.B. die Tanninvorbehandlung angewendet werden müssen; auch auf die Zugabe von Salz kann verzichtet werden.

Das Färben erfolgt dann vorzugsweise bei pH-Werten von 4 bis 8, insbesondere bei pH 5 bis 7. Die Färbetemperatur beträgt im allgemeinen 60 bis 130, vorzugsweise 60 bis 100°C.

Europäisches Patent Nr. 0054616 (ein Dokument, das unter Art. 54, Abs. 3, EPü fällt) bezieht sich auf monoazolkationische Triazinfarbstoffe, die sich für Papierfärbung eignen.

*Beispiel A:*

92 g Cyanurchlorid werden in 750 ml Aceton gelöst und auf 0°C gekühlt. Nach Zugabe von 69 g p-Nitranilin tropft man innerhalb 1 h 130 ml einer 4N-Sodalösung zu und lässt noch 1 h nachrühren. Der bei Zugabe von 600 ml Eiswasser entstehende Niederschlag wird abgesaugt und in kleinen Portionen in 250 g 1,2-Diaminopropan eingetragen, wobei sich der Ansatz auf ca. 60°C erwärmt. Man rührt noch 1 h bei ca. 100°C nach, dann wird das überschüssige 1,2-Diaminopropan unter vermindertem Druck abdestilliert. Der Rückstand wird mit 500 ml Wasser und 174 g Natriumdithionit versetzt und unter Rühren 2 h zum Sieden erhitzt. Nach dem Abkühlen auf 90°C wird mit konzentrierter Salzsäure angesäuert (pH $< 1$) und nochmals 1 h zum Sieden erhitzt, um das Schwefeldioxid zu entfernen. Die Lösung wird heiss geklärt; sie enthält

das Produkt der Formel a, das ohne Isolierung weiterverarbeitet wird

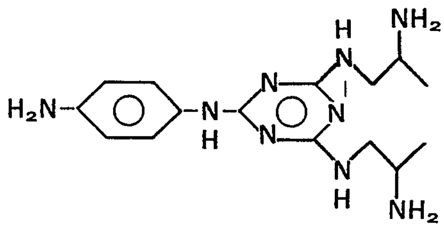

(a)

*Beispiel B:*

Verwendet man statt des in Beispiel A eingesetzten p-Nitranilin eine äquimolare Menge m-Nitranilin, so erhält man eine Lösung des Produktes der Formel b

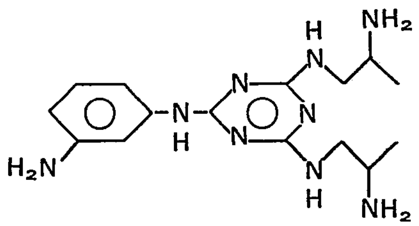

(b)

*Beispiel C:*

92 g Cyanurchlorid werden in 750 ml Aceton gelöst und auf 0°C gekühlt. Nach Zugabe von 86 g 3-Nitro-4-methylanilin tropft man innerhalb 1 h 130 ml einer 4N-Sodalösung zu und lässt noch 1 h nachrühren. Der bei Zugabe von 600 ml Eiswasser entstehende Niederschlag wird abgesaugt und in kleinen Portionen in 500 ml N-β-Aminoethylpiperazin eingetragen, wobei sich der Ansatz auf 90°C erhitzt. Man rührt noch 1 h bei ca. 100°C nach und gibt den Ansatz auf 1000 ml Eiswasser. Der Niederschlag wird abgesaugt, in 500 ml Wasser suspendiert und über Raney-Nickel hydriert. Nach Beendigung der Reduktion wird der Katalysator abfiltriert; die Lösung enthält das Produkt der Formel c

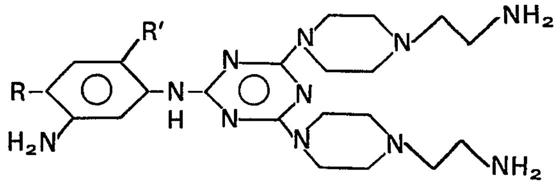

(c): R' = H, R = $CH_3$
(d): R' = $CH_3$, R = H
(e): R' = R = $CH_3$

*Beispiele D und E:*

Verwendet man statt des in Beispiel C eingesetzten 3-Nitro-4-methylanilin äquimolare Mengen 3-Nitro-6-methylanilin oder 3-Nitro-4,6-dimethylanilin, so erhält man Lösungen der Produkte d bzw. e.

*Beispiele F und G:*

Verwendet man statt des in Beispiel A eingesetzten 1,2-Diaminopropan die äquimolare Menge N-β-Hydroxy- bzw. N-β-Aminoethylpiperazin, so erhält man Lösungen der Produkte der Formeln f bzw. g

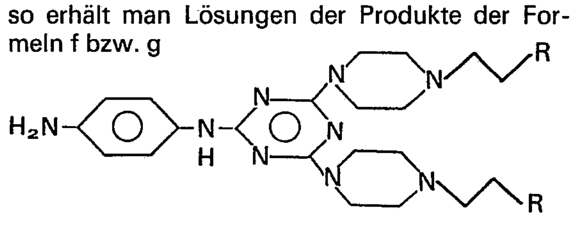

(f): R = –OH
(g): R = $-NH_2$

*Beispiele H, I und J:*

Verwendet man statt des in den Beispielen C, D und E eingesetzten N-β-Aminoethylpiperazin äquimolare Mengen N-β-Hydroxyethylpiperazin, so erhält man Lösungen der Produkte h, i, bzw. j

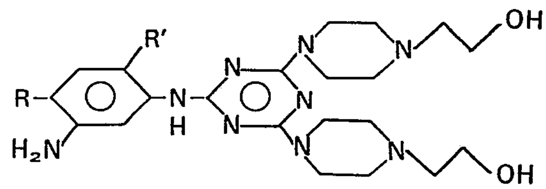

(h): R' = H, R = $CH_3$
(i): R' = $CH_3$, R = H
(j): R' = R = $CH_3$

*Beispiele K bis U:*

Nach Beispiel C können auch die Amine K bis U der folgenden Formel hergestellt werden

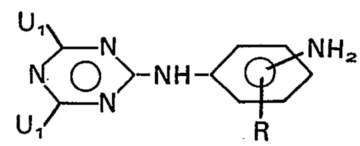

(Tabelle auf der nächsten Seite)

*Beispiel 1:*

66 g des Zwischenproduktes aus Beispiel A (ca. 300 ml Lösung) werden mit 100 g Eis versetzt und mit 14 g Natriumnitrit diazotiert. 27,6 g Bisacetoacetyl-p-phenylendiamin werden mit 8 g Natriumhydroxid in 300 ml Wasser gelöst; diese Lösung lässt man in die Lösung der Diazoniumverbindung eintropfen. Zur Vervollständigung der Kupplung wird der pH-Wert durch Zugabe von Natriumacetat auf ca. 4 gebracht, dann wird über Nacht gerührt. Der Farbstoff wird abgesaugt und in 400 ml Eisessig und 100 ml Wasser aufgelöst. Die so erhaltene Lösung färbt cellulosehaltige Materialien in gelben Tönen

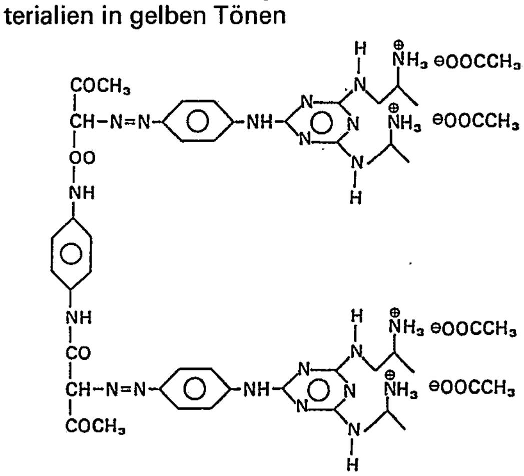

| Verbindung | $U_1$ | R | Stellung von $NH_2$ |
|---|---|---|---|
| K | $NH-(CH_2)_3-NH_2$ | 2-Chlor | 4 |
| L | $HN-(CH_2)_3-N(C_2H_5)_2$ | 2-Brom | 4 |
| M | $HN-(CH_2)_2-N(CH_3)_2$ | 2-Methoxy | 4 |
| N | $HN-(CH_2)_2-\overset{(+)}{N}(CH_3)_3$ $Cl^{(-)}$ | 4-Methoxy | 3 |
| O | 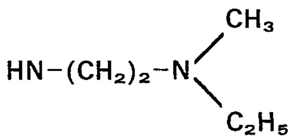 | 4-Chlor | 3 |
| P | 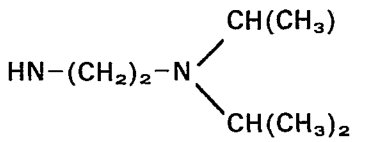 | 6-Methyl | 3 |
| Q | 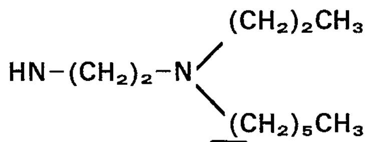 | 6-Methyl | 3 |
| R | 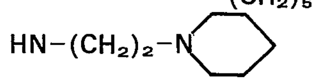 | 6-Methoxy | 3 |
| S | 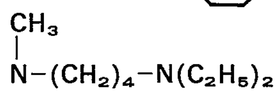 | 6-Methoxy | 3 |
| T | $HN-(CH_2)_5-N(C_2H_5)_2$ | 5-Chlor-2-methoxy | 3 |
| U | $HN-(CH_2)_3-N(CH_2CH_2OH)_2$ | 5-Chlor-2-methoxy | 3 |

*Beispiele 2 und 3:*

Verwendet man statt der in Beispiel 1 eingesetzten Kupplungskomponente äquimolare Mengen Bisacetoacetyl-2,5-dichlor-1,4-phenylendiamin bzw. Bisacetoacetyl-2,5-dimethyl-1,4-phenyldiamin, so erhält man ebenfalls Lösungen gelber Farbstoffe.

*Beispiele 4 bis 15:*

Verwendet man statt des in Beispiel 1 eingesetzten Zwischenproduktes aus Beispiel A äquimolare Mengen der Zwischenprodukte aus den Beispielen B bis E und die Kupplungskomponenten aus den Beispielen 1 bis 3 und verfährt wie in Beispiel 1 angegeben, so erhält man Lösungen grünstichig gelber Farbstoffe.

| Beispiel | Zwischenprodukt aus Beispielen | Bisacetoacetylderivat von |
|---|---|---|
| 4 | B | p-Phenylendiamin |
| 5 | C | p-Phenylendiamin |
| 6 | D | p-Phenylendiamin |
| 7 | E | p-Phenylendiamin |
| 8 | B | 2,5-Dichlor-1,4-phenylendiamin |
| 9 | C | 2,5-Dichlor-1,4-phenylendiamin |
| 10 | D | 2,5-Dichlor-1,4-phenylendiamin |
| 11 | E | 2,5-Dichlor-1,4-phenylendiamin |
| 12 | B | 2,5-Dimethyl-1,4-phenylendiamin |
| 13 | C | 2,5-Dimethyl-1,4-phenylendiamin |
| 14 | D | 2,5-Dimethyl-1,4-phenylendiamin |
| 15 | E | 2,5-Dimethyl-1,4-phenylendiamin |

*Beispiele 16 bis 30:*

Verwendet man statt des in Beispiel 1 eingesetzten Zwischenproduktes aus Beispiel A äquimolare Mengen der Zwischenprodukte aus den Beispielen F bis J und die Kupplungskomponenten aus den Beispielen 1 bis 3, so erhält man Lösungen gelber (Beispiele 16, 17, 21, 22, 26, 27) bzw. grünstichig gelber (Beispiele 18 bis 20, 23 bis 25, 28 bis 30) Farbstoffe.

| Beispiel | Zwischen-produkt aus Beispielen | Bisacetoacetylderivat von |
|---|---|---|
| 16 | F | p-Phenylendiamin |
| 17 | G | p-Phenylendiamin |
| 18 | H | p-Phenylendiamin |
| 19 | I | p-Phenylendiamin |
| 20 | J | p-Phenylendiamin |
| 21 | F | 2,5-Dichlor-1,4-phenylendiamin |
| 22 | G | 2,5-Dichlor-1,4-phenylendiamin |
| 23 | H | 2,5-Dichlor-1,4-phenylendiamin |
| 24 | I | 2,5-Dichlor-1,4-phenylendiamin |
| 25 | J | 2,5-Dichlor-1,4-phenylendiamin |
| 26 | F | 2,5-Dimethyl-1,4-phenylendiamin |
| 27 | G | 2,5-Dimethyl-1,4-phenylendiamin |
| 28 | H | 2,5-Dimethyl-1,4-phenylendiamin |
| 29 | I | 2,5-Dimethyl-1,4-phenylendiamin |
| 30 | J | 2,5-Dimethyl-1,4-phenylendiamin |

*Beispiele 31 bis 41:*

Verwendet man statt des in Beispiel 1 eingesetzten Zwischenproduktes aus Beispiel A äquimolare Mengen der Verbindungen K bis U, so erhält man Lösungen gelber (Beispiele 31 bis 33) bzw. grünstichig gelber (Beispiele 34 bis 41) Farbstoffe.

*Beispiel 42:*

Die Paste des Kupplungsproduktes aus Beispiel 1 wird in 400 ml Wasser suspendiert, der pH-Wert dieser Suspension wird mit verdünnter Natronlauge auf ca. 10 gebracht. Dazu lässt man bei Raumtemperatur 37,8 g Dimethylsulfat langsam zutropfen; der pH-Wert wird durch Zugabe von verdünnter Natronlauge konstant gehalten. Wenn die Quaternierung beendet ist, wird der Ansatz zur Zerstörung des überschüssigen Dimethylsulfats auf 80°C erhitzt. Man erhält eine stabile Lösung, die cellulosehaltige Materialien in grünstichig gelben Tönen anfärbt.

*Beispiel 43:*

Die Lösung des Zwischenproduktes aus Beispiel A wird mit Natronlauge auf pH 14 gebracht, wobei sich die Diazokomponente als Öl abscheidet.

66 g dieses Öls werden in 100 g Methansulfonsäure und 700 ml Wasser gelöst und unter Aussenkühlung bei 0°C mit 14 g Natriumnitrit diazotiert. Nach Beendigung der Diazotierung werden 27,6 g Bisacetoacetyl-p-phenylendiamin eingestreut, dann wird mit Trinatriumcitrat ein pH-Wert von 2 eingestellt. Nun erhitzt man die Mischung auf 60°C und führt bei dieser Temperatur die Kupplung zu Ende. Man erhält eine stabile Lösung des Farbstoffs aus Beispiel 1 (mit Methansulfonat/Citrat anstelle von Acetat als Anion).

*Beispiel 44:*

66 g der Diazokomponente aus Beispiel 43 werden in 90 g Methansulfonsäure, 350 ml Wasser und 350 ml Eisessig gelöst und bei 0°C mit 14 g Natriumnitrit diazotiert. Nach Beendigung der Diazotierung werden 27,6 g Bisacetoacetyl-p-phenylendiamin eingestreut, dann wird mit Natriumcitrat ein pH-Wert von 2 eingestellt. Man erhitzt die Mischung auf 60°C und führt bei dieser Temperatur die Kupplung zu Ende. Man erhält eine stabile Lösung des Farbstoffs aus Beispiel 1.

*Beispiel 45:*

Die Lösung des Zwischenproduktes aus Beispiel 3 wird mit Natronlauge auf pH 14 gebracht, wobei sich die Diazokomponente als Öl abscheidet.

89,4 g dieses Öls werden mit 100 g Methansulfonsäure in 700 ml Wasser gelöst und unter Aussenkühlung bei 0°C mit 14 g Natriumnitrit diazotiert. Nach Beendigung der Diazotierung tropft man eine Lösung von 27,6 g Bisacetoacetyl-p-phenylendiamin in 145 ml 40%iger Natronlauge zu. Man erhitzt die Mischung auf 60°C und führt bei dieser Temperatur die Kupplung zu Ende. Der pH-Wert der Lösung fällt dabei von 2,5 auf 1,5. Man erhält eine stabile Lösung des Farbstoffs aus Beispiel 20 (mit Methansulfonat anstelle von Acetat als Anion).

*Beispiel 46:*

Ein aus 60% Holzschliff und 40% ungebleichtem Sulfitzellstoff bestehender Trockenstoff wird im Holländer mit Wasser angeschlagen und bis zum Mahlgrad 40°C SR gemahlen, so dass der Trockengehalt etwas über 2,5% liegt. Anschliessend wird mit Wasser auf 2,5% Trockengehalt des Dickstoffs eingestellt.

200 Teile dieses Dickstoffs werden mit 5 Teilen einer 0,5%igen essigsauer wässerigen Lösung des Farbstoffs aus Beispiel 1 versetzt, ca. 5 min verrührt, mit 2% Harzleim und 3% Alaun (bezogen auf Trockenstoff) versetzt und wieder einige Minuten bis zur Homogenität verrührt. Man verdünnt die Masse nun mit ca. 500 Teilen Wasser und stellt hieraus in üblicher Weise durch Absaugen über einen Blattbildner Papierblätter her. Die Papierblätter weisen eine gelbe Färbung auf. Das Abwasser der Färbung ist praktisch farbstofffrei.

*Beispiel 47:*

Verwendet man statt des in Beispiel 1 eingesetzten Farbstoffs den Farbstoff aus Beispiel 2, so erhält man ebenfalls gelb gefärbte Papierblätter und ein praktisch farbstofffreies Abwasser.

*Beispiele 48 und 49:*

Auch beim Färben von ungebleichter Papiermasse unter sonst gleichen Färbebedingungen

und bei der Verwendung von gebleichtem Sulfitzellstoff erhält man gelbe Papierfärbungen und praktisch farbstofffreie Abwässer.

## Patentansprüche

1. Farbstoffe der Formel

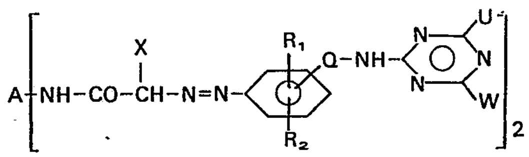

(I)

worin

U und W unabhängig voneinander Reste der Formeln

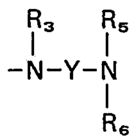 oder 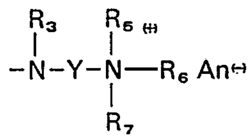

A ein von anionischen Gruppen freier bifunktioneller aromatischer Rest,

Q eine direkte Bindung oder ein Brückenglied,

X ein Rest der Formel $-COCH_3$, $-CN$, $-COOCH_3$, $-COOC_2H_5$, $-CONH_2$, $-COC_6H_5$ oder $-CON(R_3)-Y-N(R_5R_6R_7)^{(+)}$ $An^{(-)}$,

Y ein zweiwertiges Brückenglied oder eine direkte Bindung,

$R_1$ und $R_2$ unabhängig voneinander Wasserstoff oder ein nichtionischer Substituent,

$R_3$ Wasserstoff, $C_1$ bis $C_4$-Alkyl oder β- oder γ-$C_2$ bis $C_4$-Hydroxyalkyl,

$R_5$ bis $R_7$ unabhängig voneinander Wasserstoff, $C_1$ bis $C_4$-Alkyl, oder $C_2$ bis $C_4$-Alkyl, das durch Hydroxy, Amino, $C_1$ bis $C_4$-Alkylamino, Di-$C_1$ bis $C_4$-alkylamino oder Tri-$C_1$ bis $C_4$-alkylammonium substituiert ist, Phenyl oder Benzyl sind, oder

$R_5$ und $R_6$ zusammen mit dem Stickstoff einen gegebenenfalls substituierten fünf- oder sechsgliedrigen Heterocyclus, oder

Y, $R_3$ und $R_5$ zusammen mit den jeweiligen Stickstoffatomen einen Piperazinring bilden, oder

$R_5$, $R_6$ und $R_7$ zusammen mit dem Stickstoff ein gegebenenfalls substituiertes Pyridinium bilden, und

$An^{(-)}$ ein Anion ist.

2. Farbstoffe der Formel

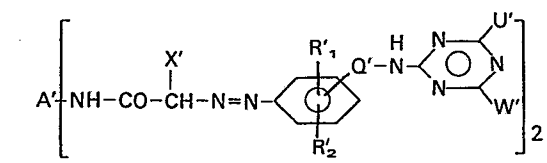

worin

U' und W' unabhängig voneinander Reste der Formeln

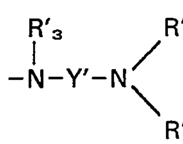 oder 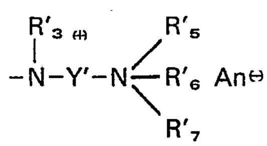

sind,

A' ein Rest der Formel 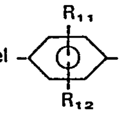 , 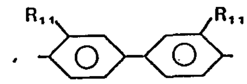 ,

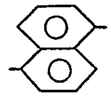 , 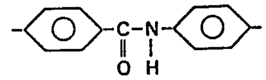

worin wiederum

$R_{11}$ und $R_{12}$ unabhängig voneinander H, Cl, Br, $OCH_3$, $OC_2H_5$, $CH_3$ oder $C_2H_5$ bezeichnen,

Q' eine direkte Bindung oder ein Rest p-$NHCOC_6H_4$- oder p-$CONHC_6H_4$-,

X' ein Rest der Formel $-COCH_3$, $-CN$, $-COOCH_3$, $-COOC_2H_5$, $-CONH_2$, $-COC_6H_5$ oder $-CON(R'_3)-Y'-N(R'_5R'_6R'_7)^{(+)}$ $An^{(-)}$,

Y' eine direkte Bindung, $C_2$ bis $C_5$-Alkylen, $C_5$ bis $C_7$-Oxaalkylen, Phenylen oder Benzylen,

$R'_1$ und $R'_2$ unabhängig voneinander H, Cl, Br, $-OCH_3$, $-OC_2H_5$, $-CH_3$ oder $-C_2H_5$,

$R'_3$ Wasserstoff, $C_1$ bis $C_4$-Alkyl, β- oder γ-$C_2$ bis $C_4$-Hydroxyalkyl,

$R'_5$ bis $R'_7$ unabhängig voneinander Wasserstoff, $C_1$ bis $C_4$-Alkyl oder $C_2$ bis $C_4$-Alkyl, das durch Hydroxy, Amino, $C_1$ bis $C_4$-Alkylamino, Di-$C_1$ bis $C_4$-alkylamino oder Tri-$C_1$ bis $C_4$-alkylammonium substituiert ist, Phenyl oder Benzyl sind, oder

$R'_5$ und $R'_6$ jeweils zusammen mit dem Stickstoff einen Pyrrolidin-, Morpholin-, Piperazin- oder Piperidinring, oder

Y', $R'_3$ und $R'_5$ zusammen mit dem jeweiligen Stickstoff einen Piperazinring bilden,

$R'_5$, $R'_6$ und $R'_7$ zusammen mit dem Stickstoff Pyridinium sind, wobei diese Heterocyclen durch $C_1$ bis $C_4$-Alkyl substituiert sein können, und

$An^{(-)}$ ein Anion ist.

3. Farbstoffe der Formeln

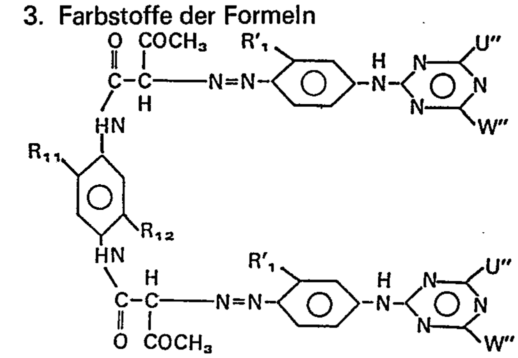

und

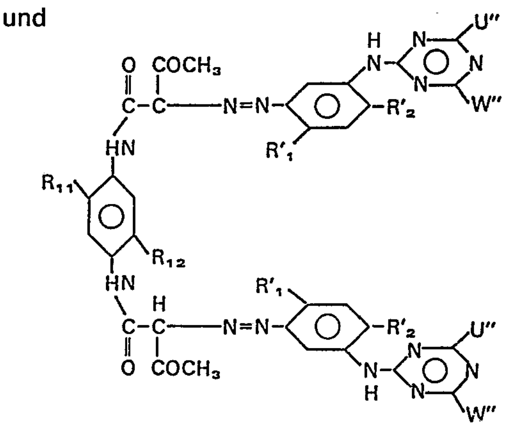

worin

U'' und W'' unabhängig voneinander Reste der Formel

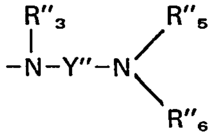

oder

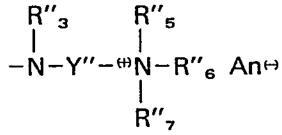

Y'' $C_2$ bis $C_4$-Alkylen,

$R''_3$ Wasserstoff oder $C_1$ bis $C_4$-Alkyl, und

$R''_5$ bis $R''_7$ unabhängig voneinander Wasserstoff, $C_1$ bis $C_4$-Alkyl oder $C_2$ bis $C_4$-Alkyl, das durch Hydroxy, Amino, $C_1$ bis $C_4$-Alkylamino, Di-$C_1$ bis $C_4$-alkylamino oder Tri-$C_1$ bis $C_4$-alkylammonium substituiert ist, sind, oder

$R''_5$ und $R''_6$ jeweils zusammen mit dem Stickstoff einen Pyrrolidin-, Morpholin-, Piperazin- oder Piperidinring bilden, oder

Y'', $R''_3$ und $R''_5$ zusammen mit dem jeweiligen Stickstoff einen Piperazinring bilden, und

$R'_1$, $R'_2$, $R_{11}$, $R_{12}$ und $An^{(-)}$ die in Anspruch 2 angegebene Bedeutung besitzen.

4. Verfahren zur Herstellung von Farbstoffen gemäss Anspruch 1, dadurch gekennzeichnet, dass man ein Cyanurhalogenid in beliebiger Reihenfolge mit den Verbindungen der Formeln

$$HN(R_3)-Y-NR_5R_6 \quad \text{und/oder}$$

$$[HN(R_3)-Y-NR_5R_6R_7]^{\oplus} An^{\ominus}$$

und

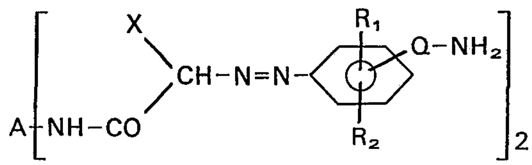

wobei

A, Q, X, Y, $R_1$ bis $R_3$, $R_5$ bis $R_7$ und $An^{(-)}$ die in Anspruch 1 angegebene Bedeutung besitzen, umsetzt.

5. Verfahren zur Herstellung von Farbstoffen gemäss Anspruch 1, dadurch gekennzeichnet, dass man ein Amin der Formel

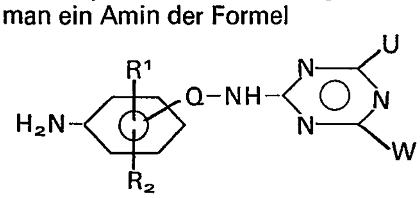

diazotiert und mit einer Kupplungskomponente der allgemeinen Formel

$$[X-CH_2-CO-NH]_{\overline{2}}A$$

wobei

$R_1$, $R_2$, Q, U, W, X und A die in Anspruch 1 angegebene Bedeutung haben, umsetzt.

6. Verfahren zum Färben von natürlichen und synthetischen kationisch anfärbbaren Substraten, dadurch gekennzeichnet, dass man Farbstoffe gemäss den Ansprüchen 1 bis 3 verwendet.

7. Verfahren zur Herstellung von konzentrierten Lösungen von Farbstoffen gemäss Anspruch 1 nach dem Verfahren von Anspruch 5, dadurch gekennzeichnet, dass man die Kupplung in Wasser in Gegenwart einer organischen Säure und gegebenenfalls weiterer organischer Lösungsmittel bei pH-Werten von $\leqslant 5$ durchführt.

8. Verfahren zum Färben von Papier, dadurch gekennzeichnet, dass man Farbstoff gemäss den Ansprüchen 1 bis 3 verwendet.

9. Papier, gefärbt mit den Farbstoffen der Ansprüche 1 bis 3.

## Claims

1. Dyestuffs of the formula

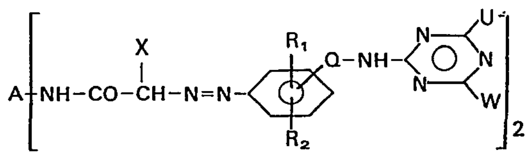

wherein

U and W independently of each other are radical of the formula

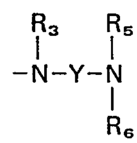

or

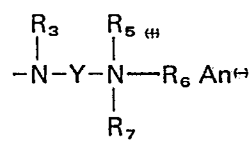

A is a bifunctional aromatic radical which is free of anionic groups,

Q is a direct bond or a bridge member,

X is a radical of the formula $-COCH_3$, $-CN$, $-COOCH_3$, $-COOC_2H_5$, $-CONH_2$, $-COC_6H_5$ or $-CON(R_3)-Y-N(R_5R_6R_7)^{(+)} An^{(-)}$,

Y is a divalent bridge member or a direct bond,

$R_1$ and $R_2$ independently of each other are hydrogen or a nonionic substituent,

$R_3$ is hydrogen, $C_1$ to $C_4$-alkyl or β- or γ-$C_2$ to $C_4$-hydroxyalkyl,

$R_5$ to $R_7$ independently of one another are hydrogen, $C_1$ to $C_4$-alkyl, $C_2$ to $C_4$-alkyl which is substituted by hydroxyl, amino, $C_1$ to $C_4$-alkylamino, di-$C_1$ to $C_4$-alkylamino or tri-$C_1$ to $C_4$-alkylammonium, phenyl or benzyl, or

$R_5$ and $R_6$, together with the nitrogen, form an optionally substituted five- or six-membered heterocyclic structure, or

Y, $R_3$ and $R_5$, together with the particular nitrogen atoms, form a piperazine ring, or

$R_5$, $R_6$ and $R_7$, together with the nitrogen, form an optionally substituted pyridinium and $An^{(-)}$ is an anion.

2. Dyestuffs of the formula

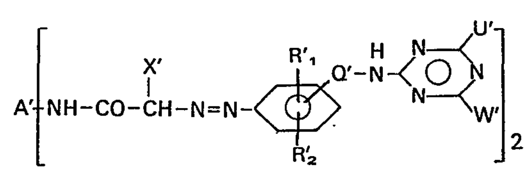

wherein

U' and W' independently of each other are radicals of the formulae

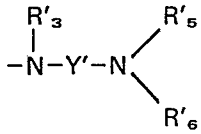

or

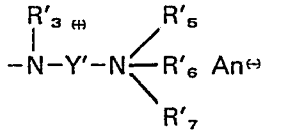

A' is a radical of the formula

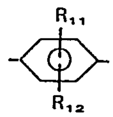 ,

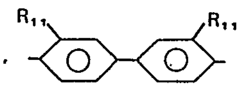 ,

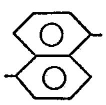 ,

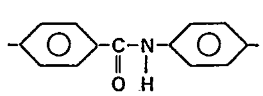

wherein

$R_{11}$ and $R_{12}$, in turn and independently of each other, designate H, Cl, Br, $OCH_3$, $OC_2H_5$, $CH_3$ or $C_2H_5$,

Q' is a direct bond or a radical p-NHCOC$_6$H$_4$- or p-CONHC$_6$H$_4$-,

X' is a radical of the formula $-COCH_3$, $-CN$, $-COOCH_3$, $-COOC_2H_5$, $-CONH_2$, $-COC_6H_5$ or $-CON(R'_3)-Y'-N(R'_5R'_6R'_7)^{(+)}$ $An^{(-)}$,

Y' is a direct bond, $C_2$ to $C_5$-alkylene, $C_5$ to $C_7$-oxaalkylene, phenylene or benzylene,

$R'_1$ and $R'_2$ independently of each other are H, Cl, Br, $-OCH_3$, $-OC_2H_5$, $-CH_3$ or $-C_2H_5$,

$R'_3$ is hydrogen, $C_1$ to $C_4$-alkyl, β- or γ-$C_2$ to $C_4$-hydroxyalkyl,

$R'_5$ to $R'_7$ independently of each other are hydrogen, $C_1$ to $C_4$-alkyl or $C_2$ to $C_4$-alkyl which is substituted by hydroxyl, amino, $C_1$ to $C_4$-alkylamino, di-$C_1$ to $C_4$-alkylamino or tri-$C_1$ to $C_4$-alkylammonium, phenyl or benzyl, or

$R'_5$ and $R'_6$, in each case together with the nitrogen, form a pyrrolidine, morpholine, piperazine or piperidine ring, or

Y', $R'_3$ and $R'_5$, together with the particular nitrogen, form a piperazine ring,

$R'_5$, $R'_6$ and $R'_7$, together with the nitrogen, are pyridinium, it being possible for these heterocyclic structures to be substituted by $C_1$ to $C_4$-alkyl, and

$An^{(-)}$ is an anion.

3. Dyestuffs of the formulae

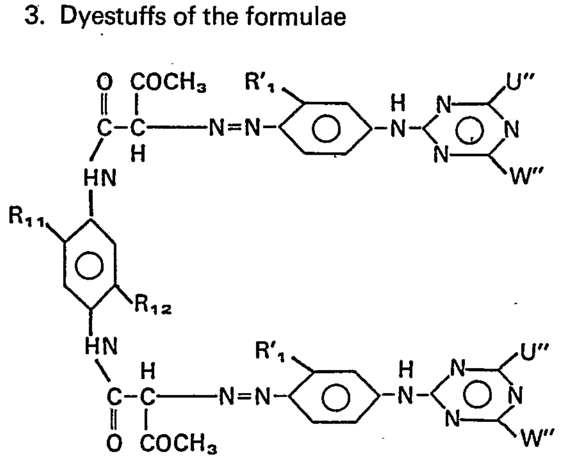

and

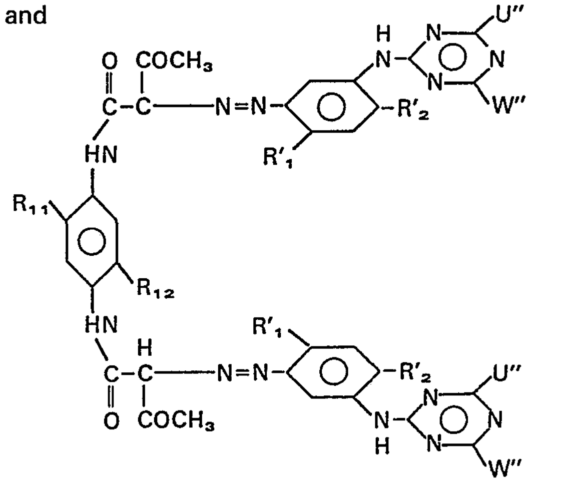

wherein

U'' and W'' independently of each other are radicals of the formula

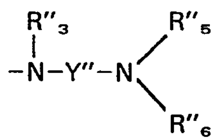

or

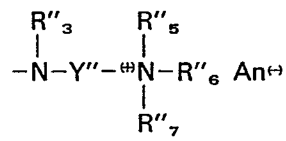

Y'' is $C_2$ to $C_4$-alkylene,

$R''_3$ is hydrogen or $C_1$ to $C_4$-alkyl, and

$R''_5$ to $R''_7$ independently of each other are hydrogen, $C_1$ to $C_4$-alkyl or $C_2$ to $C_4$-alkyl which is substituted by hydroxyl, amino, $C_1$ to $C_4$-alkylamino, di-$C_1$ to $C_4$-alkylamino or tri-$C_1$ to $C_4$-alkylammonium, or

$R''_5$ and $R''_6$, in each case together with the nitrogen, form a pyrrolidine, morpholine, piperazine or piperidine ring, or

Y'', $R''_3$ and $R''_5$, together with the particular nitrogen, form a piperazine ring, and

$R'_1$, $R'_2$, $R_{11}$, $R_{12}$ and $An^{(-)}$ have the meaning indicated in Claim 2.

4. Process for preparing dyestuffs according to Claim 1, characterised in that a cyanuric halide is reacted in optional order with compounds of the formulae

$$HN(R_3)-Y-NR_5R_6 \quad \text{and/or}$$

$$[HN(R_3)-Y-NR_5R_6R_7]^{\oplus} An^{\ominus}$$

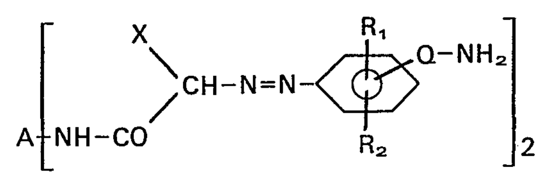

in which

A, Q, X, Y, $R_1$ to $R_3$, $R_5$ to $R_7$ and $An^{(-)}$ have the meaning indicated in Claim 1.

5. Process for preparing dyestuffs according to Claim 1, characterised in that an amine of the formula

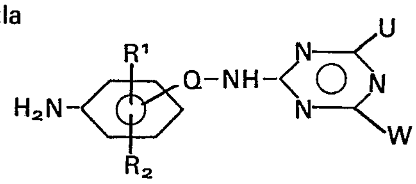

is diazotised and reacted with a coupling component of the general formula

$$[X-CH_2-CO-NH]_2A$$

in which

$R_1$, $R_2$, Q, U, W, X and A have the meaning indicated in Claim 1.

6. Process for dyeing natural and synthetic cationically dyeable substrates, characterised in that dyestuffs according to Claims 1 to 3 are used.

7. Process for preparing concentrated solutions of dyestuffs according to Claim 1 by the process of Claim 5, characterised in that the coupling in water is carried out in the presence of an organic acid and, if appropriate, of other organic solvents at pH values of $\leqslant 5$.

8. Process for colouring paper, characterised in that dyestuffs according to Claims 1 to 3 are used.

9. Paper, coloured with dyestuffs of Claims 1 to 3.

## Revendications

1. Colorants de formule

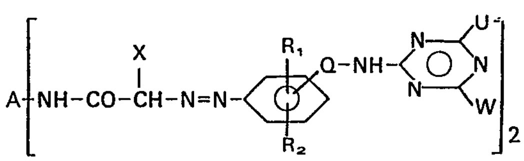

dans laquelle

U et W représentent, indépendamment l'un de l'autre, des restes de formules

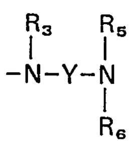
ou
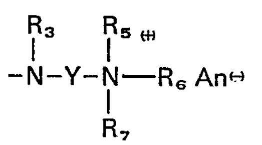

A représente un reste aromatique bifonctionnel exempt de groupes anioniques,

Q représente une liaison directe ou un pont,

X représente un reste de formule $-COCH_3$, $-CN$, $-COOCH_3$, $-COOC_2H_5$, $-CONH_2$, $-COC_6H_5$ ou $-CON(R_3)-Y-N(R_5R_6R_7)^{(+)}$ $An^{(-)}$,

Y représente un pont divalent ou une liaison directe,

$R_1$ et $R_2$ représentent, indépendamment l'un de l'autre, l'hydrogène ou un substituant non ionique,

$R_3$ représente l'hydrogène, un groupe alkyle en $C_1$ à $C_4$ ou β- ou γ-hydroxyalkyle en $C_2$ à $C_4$,

$R_5$ à $R_7$ représentent, indépendamment les uns des autres, l'hydrogène, un groupe alkyle en $C_1$ à $C_4$, ou un groupe alkyle en $C_2$ à $C_4$ substitué par un groupe hydroxy, amino, alkylamino en $C_1$ à $C_4$, di(alkyle en $C_1$ à $C_4$)-amino ou tri(alkyle en $C_1$ à $C_4$)-ammonium un groupe phényle ou benzyle, ou bien

$R_5$ et $R_6$ forment ensemble et avec l'azote un hétérocycle à 5 ou 6 chaînons éventuellement substitué, ou bien

Y, $R_3$ et $R_5$ forment ensemble et avec les atomes d'azote correspondants un noyau pipérazine, ou bien

$R_5$, $R_6$ et $R_7$ forment ensemble et avec l'azote un groupe pyridinium éventuellement substitué, et

$An^{(-)}$ représente un anion.

2. Colorants de formule

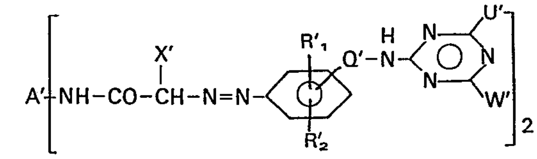

dans laquelle

U' et W' représentent, indépendamment l'un de l'autre, des restes de formules

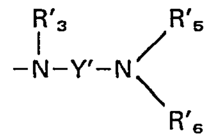
ou
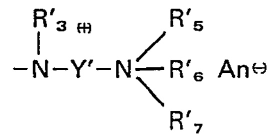

A' représente un reste de formule

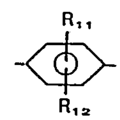
,
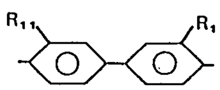
,

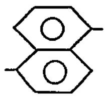
,
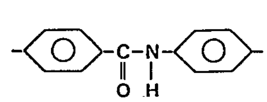

dans laquelle $R_{11}$ et $R_{12}$ représentent, indépendamment l'un de l'autre, H, Cl, Br, $OCH_3$, $OC_2H_5$, $CH_3$ ou $C_2H_5$,

Q' représente une liaison directe ou un reste $p-NHCOC_6H_4-$ ou $p-CONHC_6H_4-$,

X' représente un reste de formule $-COCH_3$, $-CN$, $-COOCH_3$, $-COOC_2H_5$, $-CONH_2$, $-COC_6H_5$ ou $-CON(R'_3)-Y'-N(R'_5R'_6R'_7)^{(+)}$ $An^{(-)}$,

Y' représente une liaison directe, un groupe alkylène en $C_2$ à $C_5$, oxaalkylène en $C_5$ à $C_7$, phénylène ou benzylène,

$R'_1$ et $R'_2$ représentent, indépendamment l'un de l'autre, H, Cl, Br, $-OCH_3$, $-OC_2H_5$, $-CH_3$ ou $-C_2H_5$,

$R'_3$ représente l'hydrogène, un groupe alkyle en $C_1$ à $C_4$, β- ou γ-hydroxyalkyle en $C_2$ à $C_4$,

$R'_5$ à $R'_7$ représentent, indépendamment les uns des autres, l'hydrogène, un groupe alkyle en $C_1$ à $C_4$ ou alkyle en $C_2$ à $C_4$ substitué par un groupe hydroxy, amino, alkylamino en $C_1$ à $C_4$, di(alkyle en $C_1$ à $C_4$)-amino ou tri(alkyle en $C_1$ à $C_4$)-ammonium, un groupe phényle ou benzyle, ou bien

$R'_5$ et $R'_6$ forment ensemble et avec l'azote un noyau pyrrolidine, morpholine, pipérazine ou pipéridine, ou bien

Y', $R'_3$ et $R'_5$ forment ensemble et avec l'atome d'azote correspondant un noyau pipérazine,

$R'_5$, $R'_6$ et $R'_7$ forment ensemble et avec l'azote un groupe pyridinium, ces hétérocycles pouvant être substitués par un groupe alkyle en $C_1$ à $C_4$, et

$An^{(-)}$ représente un anion.

3. Colorants de formules

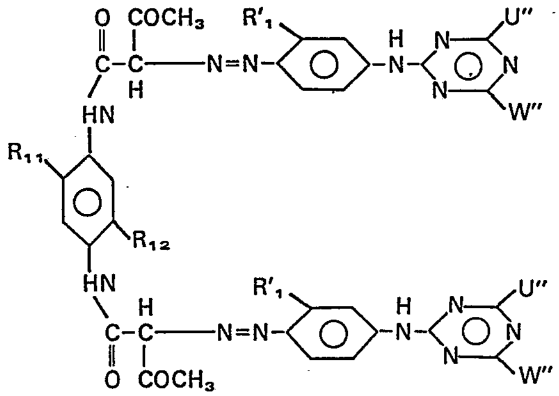

et

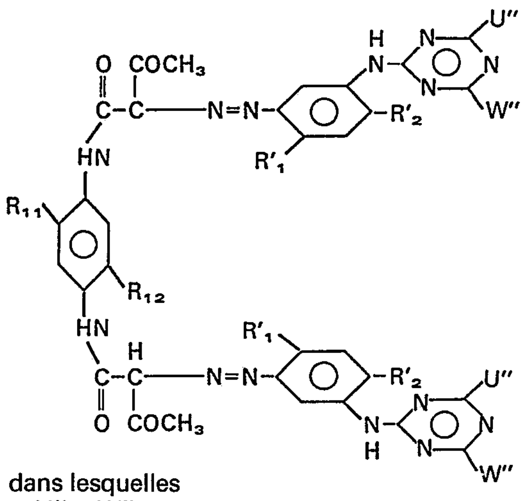

dans lesquelles

U'' et W'' représentent, indépendamment l'un de l'autre, des restes de formule

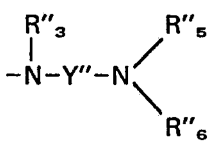

ou

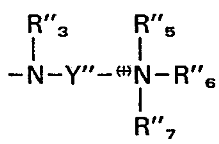

Y'' représente un groupe alkylène en $C_2$ à $C_4$,

R''$_3$ représente l'hydrogène ou un groupe alkyle en $C_1$ à $C_4$, et

R''$_5$ à R''$_7$ représentent, indépendamment les uns des autres, l'hydrogène, un groupe alkyle en $C_1$ à $C_4$ ou alkyle en $C_2$ à $C_4$ substitué par un groupe hydroxy, amino, alkylamino en $C_1$ à $C_4$, di(alkyle en $C_1$ à $C_4$)-amino ou tri(alkyle en $C_1$ à $C_4$)-ammonium, ou bien

R''$_5$ et R''$_6$ forment ensemble avec l'atome d'azote un cycle pyrrolidine, morpholine, pipérazine ou pipéridine, ou bien

Y'', R''$_3$ et R''$_5$ forment ensemble et avec l'azote correspondant un noyau pipérazine, et

R'$_1$, R'$_2$, $R_{11}$, $R_{12}$ et $An^{(-)}$ ont les significations indiquées dans la revendication 2.

4. Procédé de préparation des colorants selon la revendication 1, caractérisé en ce que l'on fait réagir un halogénure de cyanuryle dans un ordre quelconque avec les composés de formules

$$HN(R_3)-Y-NR_5R_6 \quad \text{et/ou}$$

$$[HN(R_3)-Y-NR_5R_6R_7]^{\oplus} An^{\ominus}$$

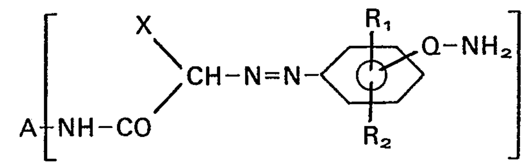 (IV)

dans lesquelles

A, Q, X, Y, $R_1$ à $R_3$, $R_5$ à $R_7$ et $An^{(-)}$ ont les significations indiquées dans la revendication 1.

5. Procédé de préparation des colorants selon la revendication 1, caractérisé en ce que l'on diazote une amine de formule

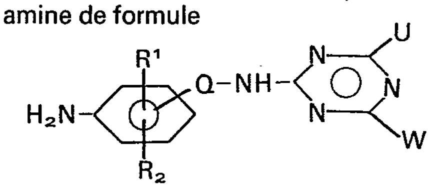

et on ce qu'on fait réagir avec un copulant de formule générale

$$[X-CH_2-CO-NH]_{\overline{2}}A$$

$R_1$, $R_2$, Q, U, W, X et A ayant les significations indiquées dans la revendication 1.

6. Procédé pour teindre ou colorer des substrats naturels et synthétiques aptes à la teinture ou à la coloration par des colorations cationiques, caractérisé en ce que l'on utilise des colorants selon les revendications 1 à 3.

7. Procédé de préparation de solutions concentrées des colorants selon la revendication 1 par le procédé de la revendication 5, caractérisé en ce que l'on effectue la copulation dans l'eau en présence d'un acide organique et, le cas échéant, d'autres solvants organiques à des pH $\leqslant$ 5.

8. Procédé pour colorer le papier, caractérisé en ce que l'on utilise des colorants selon les revendications 1 à 3.

9. Papier coloré à l'aide des colorants des revendications 1 à 3.